# DEMANDE DE BREVET EUROPEEN

(11) **EP 0 837 539 A1**
(43) Date de publication de la demande: **22.04.1998**
(21) Numéro de dépôt: 96402232.1
(22) Date de dépôt: 18.10.1996
(51) Int. Cl.: H02K 3/24, H02K 15/00

(54) **Procédé de réparation d'une boîte à fluide de refroidissement d'une barre statorique d'un alternateur électrique**

(71) Demandeur: Jeumont Industrie, 92400 Courbevoie (FR)
(72) Inventeur: Champagne, Alain, 59570 La Longueville (FR); Demarez, Christophe, 59570 Houdain les Bavay (FR); Farineau, Michel, 59168 Boussois (FR)
(74) Mandataire: Corret, Hélène

(57) **Abrégé**

L'invention concerne un procédé de réparation d'une boîte à fluide de refroidissement du circuit de refroidissement d'une barre statorique d'un alternateur, l'étanchéité entre ladite boîte et ladite barre statorique étant défectueuse, selon lequel :
- on débranche le circuit de refroidissement (9, 12, 6, 7, 16),
- on découpe ladite boîte (4), selon un plan sensiblement perpendiculaire à l'axe (31) de l'alternateur,
- on réalise l'étanchéité entre la barre statorique (3) et la boîte (4),
- on fixe un couvercle (17) sur la boîte (4), selon ledit plan de découpe,
- on refroidit la barre statorique pendant les opérations de reprise d'étanchéité et de fixation du couvercle,
- on rétablit le circuit électrique de la barre statorique (3),
- on raccorde le circuit de refroidissement de la barre statorique.

## Description

L'invention concerne un procédé de réparation d'une boîte à fluide de refroidissement, permettant le passage du fluide de refroidissement des barres statoriques d'un alternateur électrique, notamment un alternateur de grande puissance de 600 à 1300 MW par exemple.

Le bobinage du stator d'un alternateur notamment de forte puissance, est constitué d'une série de barres, généralement refroidies à l'aide d'un fluide de refroidissement qui est classiquement de l'eau. On peut également utiliser de l'hydrogène ou de l'air.

Chaque extrémité de barre se termine par une boîte à fluide de refroidissement qui assure à la fois, la liaison électrique avec le reste du bobinage et la liaison avec les autres éléments du circuit de refroidissement.

L'étanchéité entre les boîtes à fluide de refroidissement et les barres statoriques doit être assurée, pour éviter toute fuite du fluide de refroidissement entre l'extérieur et l'intérieur des boîtes à fluide de refroidissement. En effet, ces fuites peuvent notamment entraîner des défauts d'isolement et des problèmes de corrosion.

Ainsi, lorsque des défauts d'étanchéité trop importants sont constatés, on change les barres du stator concernées. Cette opération est donc très coûteuse.

L'invention a pour objet de pallier ces inconvénients en proposant un procédé de réparation qui ne nécessite pas le changement complet des barres statoriques présentant un défaut d'étanchéité avec des boîtes à fluide de refroidissement.

Ainsi, l'invention concerne un procédé de réparation d'une boîte à fluide de refroidissement du circuit de refroidissement d'une barre statorique d'un alternateur, l'étanchéité entre ladite boîte et ladite barre statorique étant défectueuse, selon lequel :
- on débranche le circuit de refroidissement,
- on découpe ladite boîte selon un plan sensiblement perpendiculaire à l'axe de l'alternateur,
- on réalise l'étanchéité entre la barre statorique et la boîte,
- on fixe un couvercle sur la boîte, selon le plan de découpe,
- on refroidit la barre statorique pendant les opérations de reprise d'étanchéité et de fixation du couvercle,
- on rétablit le circuit électrique de la barre statorique et
- on raccorde le circuit de refroidissement de la barre statorique.

Les caractéristiques suivantes du procédé selon l'invention peuvent également être prises en considération, isolément ou selon toutes leurs combinaisons techniques possibles :
- on refroidit la barre statorique au moyen de pièces creuses, réalisées en un métal bon conducteur de la chaleur, qui sont disposées de part et d'autre de la barre statorique et dans lesquelles on fait circuler un liquide de refroidissement.
- la barre statorique étant constituée de conducteurs creux pour la circulation du fluide de refroidissement et de conducteurs pleins, les conducteurs pleins et creux traversant le fond de la boîte à fluide de refroidissement, on réalise l'étanchéité entre la barre statorique et ladite boîte en déposant un matériau d'étanchéité entre les conducteurs et le fond de la boîte,
- le matériau déposé pour réaliser l'étanchéité est une brasure,
- le couvercle est fixé par soudure sur la boîte à fluide de refroidissement,
- avant de souder le couvercle, on dresse par usinage la surface de découpe de la partie de boîte à fluide de refroidissement restée en place,
- on dispose un clinquant de métal d'apport, entre les deux surfaces du joint de soudure, entre la boîte à fluide de refroidissement et le couvercle,
- la soudure du couvercle sur la boîte à fluide de refroidissement est réalisée au moyen d'un chauffage par induction,
- les moyens de chauffage par induction sont placés à l'extérieur de la boîte à fluide de refroidissement, au niveau des surfaces du joint de soudure,
- on découpe également la boîte à fluide de refroidissement d'une deuxième barre statorique qui est liée électriquement à celle dont l'étanchéité est défectueuse et réparée, un couvercle étant ensuite soudé sur cette deuxième boite, le circuit électrique étant alors rétabli au moyen d'un connecteur, fixé entre les deux couvercles.

D'autres buts, avantages et caractéristiques du procédé selon l'invention, apparaîtront plus clairement à la lecture de la description qui suit de modes non limitatifs de mise en oeuvre de celui-ci. Cette description sera faite en référence aux dessins annexés sur lesquels :
- la figure 1 représente une vue schématique en coupe axiale du stator d'un alternateur,
- la figure 2 représente l'extrémité de deux barres statoriques électriquement liées,
- la figure 3 est une vue schématique en coupe, selon la ligne III-III, d'une boîte à fluide de refroidissement,
- la figure 4 est une vue schématique de l'extrémité d'une barre statorique, la boîte à fluide de refroidissement' ayant été découpée suivant la ligne D de la figure 2,
- la figure 5 est une vue semblable à la figure 4, sur laquelle sont représentés les moyens permettant de réaliser l'étanchéité entre la barre statorique et la boite à fluide de refroidissement,
- la figure 6 est une vue semblable à la figure 4 qui illustre l'étape de soudure d'un couvercle sur une boîte à fluide de refroidissement, préalablement découpée,
- la figure 7 est une vue de côté et en coupe partielle de la figure 4 qui représente l'outillage utilisé pour maintenir en place le couvercle sur la boîte à fluide de refroidissement, pendant l'étape de soudure, et
- la figure 8 illustre l'extrémité de deux barres statoriques, les boîtes à fluide de refroidissement présentant un couvercle et étant raccordées électriquement au moyen de connecteurs.

Les éléments communs aux différentes figures seront désignés par les mêmes références.

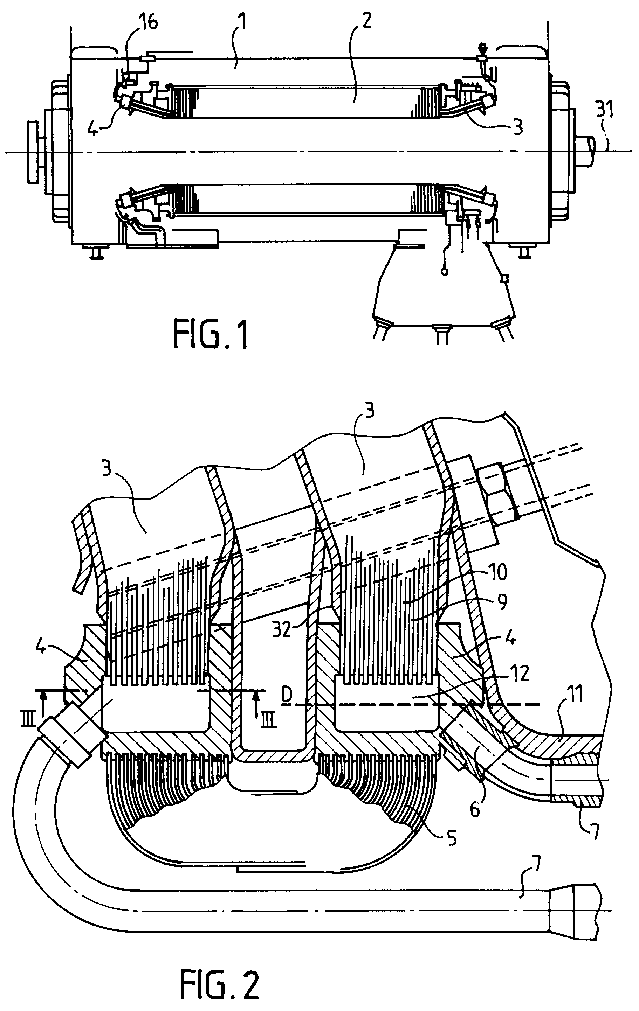

La figure 1 montre le stator d'un alternateur, constitué d'une carcasse 1 qui supporte le circuit magnétique 2, dans lequel est logé le bobinage. Celui-ci est constitué d'une série de barres 3. Chaque extrémité de barre statorique se termine par une boîte à fluide de refroidissement 4 permettant d'assurer la liaison électrique avec le reste du bobinage statorique et la liaison avec les collecteurs 16 pour le fluide de refroidissement des barres 3.

L'axe de l'alternateur est désigné par la référence 31.

Le bobinage des alternateurs, notamment ceux de grande puissance, sont classiquement refroidis par eau, circulant à l'intérieur des barres statoriques. Ce type de refroidissement permet d'obtenir des densités de courant très importantes dans les barres.

Dans la suite de la description, on considèrera que le fluide de refroidissement est de l'eau, mais ceci ne saurait être considéré comme limitatif.

Par ailleurs, en fonctionnement normal, la carcasse est remplie d'hydrogène à une pression de plusieurs bars, ce qui contribue au refroidissement du rotor et partiellement du stator.

La figure 2 montre deux barres statoriques 3 qui sont reliées électriquement. Cette liaison électrique peut être assurée par un ensemble de lamelles de cuivre 5. Elle peut également être réalisée au moyen d'une connexion massive boulonnée sur les boîtes à eau. Ce mode de réalisation n'est pas illustré sur la figure 2.

Chaque extrémité de barre 3 se termine par une boite à eau 4.

De façon classique, une barre statorique est constituée de conducteurs creux 9 pour la circulation de l'eau de refroidissement et de conducteurs pleins 10.

La boîte à eau présente une cavité, ouverte en regard de la barre statorique, pour permettre à l'extrémité de la barre statorique de pénétrer dans la boîte à eau, en ménageant une chambre 12.

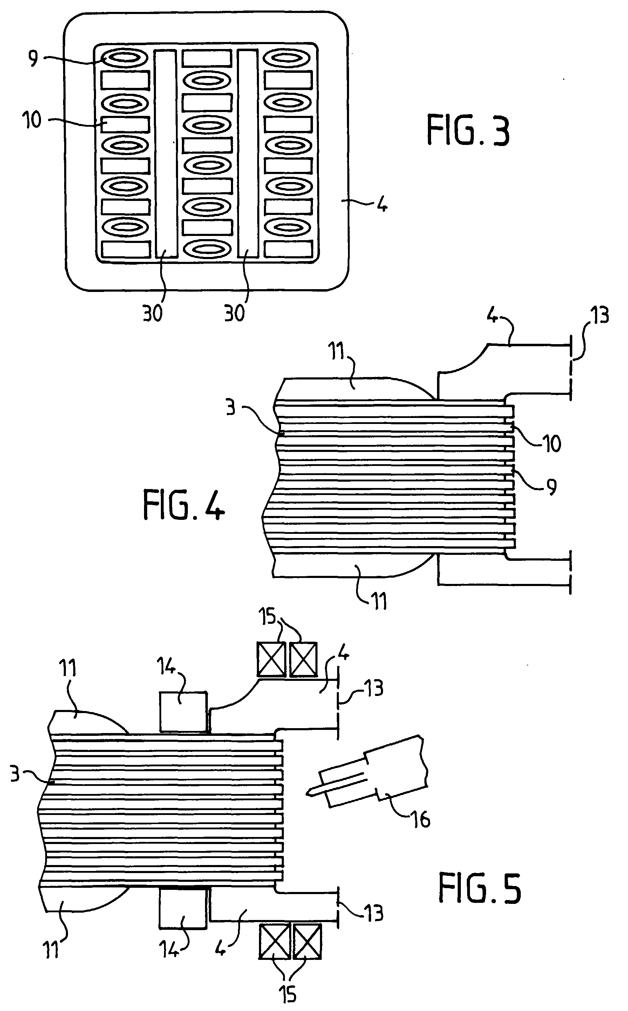

La figure 3 qui est une vue en coupe de la boîte à eau selon la ligne III-III de la figure 2, montre comment les conducteurs creux 9 et les conducteurs pleins 10 sont disposés par rapport à la boîte à eau.

La référence 30 désigne des intercalaires qui permettent d'écarter des rangées de conducteurs lors de la fabrication des barres 3.

L'étanchéité de la boîte à eau est obtenue, lors de la fabrication du stator, en brasant simultanément les conducteurs 9 et 10, les intercalaires 30 et la boîte à eau 4, ce qui permet d'obtenir une diffusion par capillarité de la brasure entre tous ces éléments. La brasure forme alors une barrière étanche. Elle assure également la liaison électrique entre les conducteurs et la boîte à eau.

Comme le montre la figure 2, les conducteurs 9 et 10 sont légèrement en saillie par rapport au fond de la boîte à eau 4.

Le circuit d'eau de refroidissement est constitué par :
- les conducteurs creux 9,
- la chambre 12 formée par la boîte à eau 4 et l'extrémité de la barre 3,
- l'élément 6 qui traverse la boîte à eau 4 et la relie au collecteur 16, par l'intermédiaire de tuyaux 7.

Ces tuyaux 7 sont généralement réalisés en Téflon.

Chaque barre 3 est recouverte d'une isolation 11, jusqu'à l'arrière de la boîte à eau 4.

L'extrémité de chaque barre comporte également une isolation 32 pour permettre la tenue diélectrique entre les extrémités de barres et par rapport à la masse. En effet, les tensions usuelles de fonctionnement sont supérieures à 20 kV.

L'étanchéité entre les boîtes à eau et les barres statoriques doit être parfaite. En effet, il convient d'éviter toute infiltration d'eau sous l'isolant 11, lorsque celui-ci est étanche à l'hydrogène environnant ou que la pression d'eau dans la chambre 12 est supérieure à la pression d'hydrogène dans la machine. Ces infiltrations conduisent, en effet, à des défauts d'isolement pouvant avoir des conséquences très graves pour l'alternateur.

Il convient également d'éviter toute infiltration d'hydrogène à travers l'isolant 11 vers la chambre 12 de la boîte à eau, dans le cas où la pression d'hydrogène est supérieure à la pression d'eau dans la chambre 12. Ces infiltrations provoquent un mauvais refroidissement de la barre statorique concernée et surtout, modifient les caractéristiques chimiques de l'eau de refroidissement des barres 3. Ceci peut créer de graves problèmes de corrosion des conducteurs creux 9.

Cependant, des défauts d'étanchéité peuvent apparaître entre une boîte à eau, les conducteurs creux 9, les conducteurs pleins 10 et les intercalaires 30. Ces défauts d'étanchéité sont dus à un manque de brasure entre certains de ces éléments, ce qui entraîne des fuites entre l'extérieur et l'intérieur de la boîte à eau.

A ce jour, lorsqu'un tel défaut d'étanchéité est constaté, on doit procéder au changement de la barre statorique concernée, ce qui entraîne des frais considérables.

Le procédé selon l'invention a pour objet de réparer les bottes à eau présentant des défauts d'étanchéité par manque de brasure. Il permet également de tenir compte de leur environnement de travail et notamment du fait que les barres statoriques sont en position horizontale et que le reste du bobinage est à proximité des boîtes à eau.

Avant d'intervenir sur l'alternateur, il convient de débrancher le circuit de refroidissement, pour éviter toute circulation d'eau pendant la réparation.

On découpe ensuite en deux parties la boîte à eau présentant un défaut d'étanchéité. La découpe est effectuée selon un plan sensiblement perpendiculaire à l'axe 31 de l'alternateur, qui passe par la ligne D qui est illustrée à la figure 2.

On élimine la partie de la boîte à eau qui comporte la liaison électrique 5 avec la barre statorique adjacente ainsi que la connexion hydraulique, constituée par la pièce 6 et le tuyau 7. On obtient ainsi la pièce représentée à la figure 4.

Il n'est nécessaire de réparer que les boîtes à eau présentant un défaut d'étanchéité. Cependant, comme on le verra par la suite, il est préférable de découper non seulement la boîte à eau présentant un défaut d'étanchéité mais également la boîte à eau qui est liée électriquement à celle qui doit être réparée. Ceci permet de rétablir, de façon plus aisée, la connexion électrique entre les deux barres statoriques correspondantes, cette connexion étant nécessairement détruite lorsque l'on découpe la boîte à eau devant être réparée.

Ainsi, le procédé selon l'invention est décrit en regard d'une seule boite à eau. Cependant, en général, les mêmes opérations, à l'exclusion de la reprise d'étanchéité si cela n'est pas nécessaire, seront effectuées sur les deux boîtes à eau des barres statoriques électriquement liées.

La surface de découpe 13 de la boîte à eau 4 représentée à la figure 4 est, de préférence, dressée par usinage. Cette opération a essentiellement pour but de faciliter la soudure d'un couvercle sur la partie de la boîte à eau restée en place, qui sera décrite ultérieurement.

L'extrémité des conducteurs 9 et 10 ainsi que l'intérieur de la boîte à eau 4 sont ensuite débarrassés de leur couche d'oxyde et nettoyés.

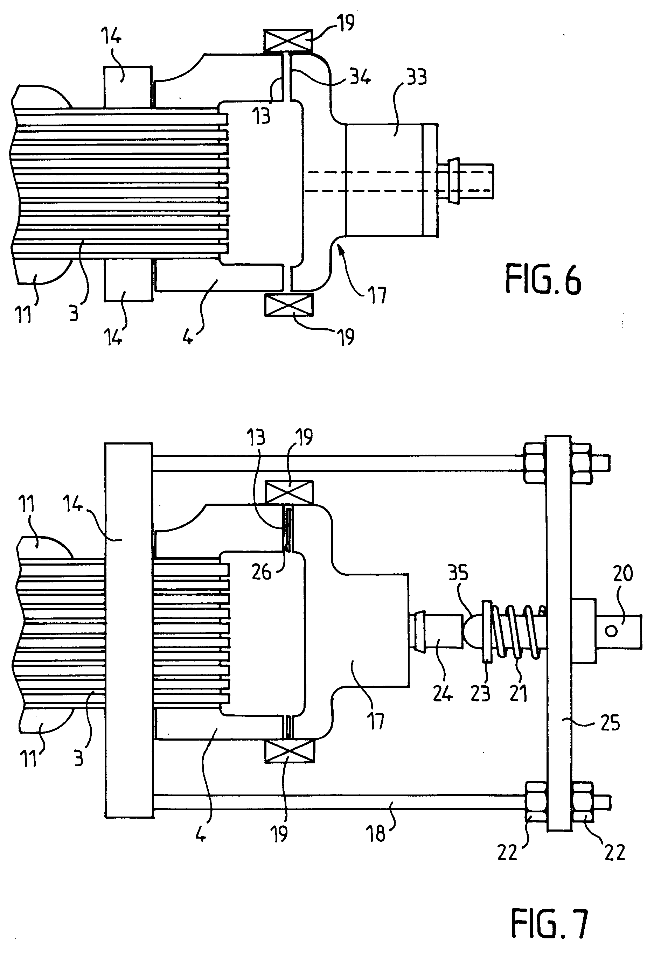

L'isolation 11 située à l'arrière de la boîte à eau 4 est éliminée sur une certaine distance, comme cela est illustré à la figure 5.

On place ensuite des moyens de refroidissement 14, à l'arrière de la boîte à eau 4. Ces moyens permettent de maintenir la température des conducteurs 9 et 10, à une valeur acceptable par l'isolation 11, recouvrant le reste de la barre statorique 3.

Ainsi l'isolation 11 est éliminée à l'extrémité de la barre statorique, de façon à ce que les moyens de refroidissement 14 soient pleinement efficaces.

Dans l'exemple représenté à la figure 5, les moyens de refroidissement 14 comprennent deux pièces creuses, réalisées en un métal bon conducteur de la chaleur, notamment du cuivre. Ces pièces sont placées de part et d'autre de la barre statorique 3. On fait circuler à l'intérieur de celles-ci un fluide de refroidissement, notamment de l'eau. D'autres moyens de refroidissement pourraient être envisagés.

L'opération suivante consiste à reprendre l'étanchéité entre la boîte à eau 4 et la barre statorique 3. Cette étape est plus particulièrement illustrée à la figure 5.

On commence par préchauffer, à une température de 250°C, la boîte à eau 4 au moyen d'un dispositif 15. Ce dispositif est notamment constitué par des bobines d'induction.

La reprise d'étanchéité est réalisée par un dépôt de brasure entre tous les conducteurs 9 et 10 et les intercalaires 30, ainsi qu'à l'interface entre ces éléments et la boîte à eau. L'utilisation d'une torche TIG 16 apporte localement l'énergie nécessaire pour réaliser une bonne brasure. Tout autre moyen de chauffage pourrait également être utilisé.

Après cette opération, tous les conducteurs 9 et 10, les intercalaires 30 et la boîte à eau 4 sont entourés d'un apport de brasure, présentant de préférence plusieurs millimètres d'épaisseur, réalisant l'étanchéité recherchée.

Il convient ensuite de fermer la boîte à eau, au moyen d'un couvercle.

Pour cela, l'intérieur de la boîte à eau 4 est nettoyé, ainsi que la surface de découpe 13.

Les moyens de refroidissement 14 sont maintenus en place.

On se réfère maintenant à la figure 6 qui est une vue semblable à la figure 4 et sur laquelle sont représentés un couvercle 17, à extrémité cylindrique 33, ainsi que des moyens de chauffage 19.

Le couvercle 17 est placé en regard de la boîte 4, la surface de découpe 13 de la boîte et la surface d'extrémité 34 du couvercle étant en vis-à-vis. Ces deux surfaces forment les faces du joint de soudure entre le couvercle et la boîte à eau.

Les moyens de chauffage 19 sont placés à l'extérieur de la boite à eau 4, au niveau du joint de soudure et sont, de préférence, constitués par une bobine à induction.

Lorsque les faces 13 et 34 du joint de soudure ont été préparées, on place un clinquant de brasure 26 (cf. figure 7) entre la boîte à eau 4 et le couvercle 17. Ce clinquant est un métal d'apport qui assure la liaison par brasage entre la boîte à eau et le couvercle. On positionne ensuite le couvercle 17 par rapport à la boîte à eau.

On se réfère maintenant à la figure 7 qui représente l'outillage utilisé pour maintenir en place le couvercle 17 sur la boîte à eau, pendant l'étape de soudure.

Cet outillage comprend tout d'abord des tiges filetées 18 qui sont fixées sur les moyens de réfrigération 14.

Il comprend également une plaque 25 qui est positionnée, fixée et maintenue en place sur les tiges 18, au moyen d'écrous 22. La plaque 25 est percée d'un trou, sensiblement en son centre, pour permettre le passage d'un pion 20 qui présente un embout arrondi 35, du côté du couvercle 17. Ce pion 20 est également muni d'un écrou 23 et d'un ressort 21.

L'embout arrondi 33 se loge dans l'embout de passage d'eau 24 du couvercle 17. Le ressort 21 permet d'appliquer sur le couvercle 17, un effort constant pendant l'opération de soudure et assure ainsi le maintien en place du couvercle.

Cet outillage de maintien étant mis en place, on procède à la soudure du couvercle 17 sur la boîte à eau 4.

Le cycle de brasage au moyen de la bobine d'induction 19 doit être très court, pour éviter tout échauffement excessif au niveau de l'isolation 20. La température de chauffage est d'environ 780°C.

Les moyens de refroidissement 14 permettent de refroidir l'arrière de la boîte à eau et d'éviter ainsi que ne fondent les brasures entre les conducteurs 9 et 10 et la boîte à eau, tant d'origine qu'apportées au cours de la réparation. Ce refroidissement permet également d'éviter que l'isolation 11 n'atteigne des températures excessives.

Lorsque le couvercle est soudé sur la boîte à eau 4, on retire l'outillage de maintien et on procède au nettoyage des pièces.

Il est ensuite nécessaire d'isoler de nouveau l'arrière de la boîte à eau, pour rétablir l'isolation qui existait à l'origine.

Il convient également de rétablir le circuit électrique de la barre statorique qui a été réparée. Comme cela a été indiqué précédemment, seules les barres statoriques et les boîtes à eau présentant un défaut d'étanchéité doivent être réparées. Cependant, chaque barre statorique est liée électriquement à une autre barre statorique, comme le montre la figure 2. Dans le cas où une seule boîte à eau est réparée, la liaison électrique ne peut être rétablie qu'en reformant un ensemble de lamelles de cuivre, comme celui qui existait à l'origine. Cette opération est donc longue et coûteuse, en particulier parce qu'elle entraîne un temps d'immobilisation de la machine relativement long.

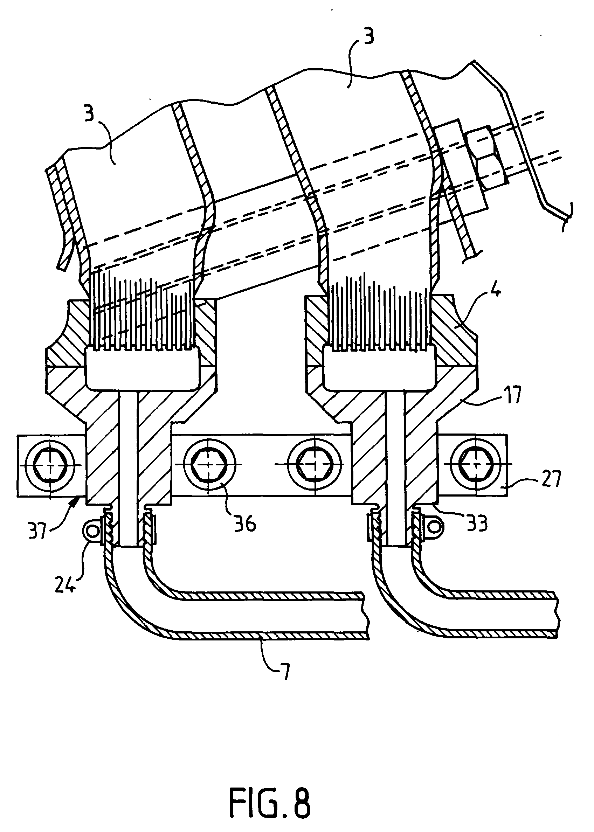

C'est pourquoi l'on préfère découper les boîtes à eau de deux barres statoriques adjacentes et liées électriquement, comme cela a été décrit précédemment. On rétablit l'étanchéité pour la ou les boîtes à eau selon les cas. Et on procède ensuite à la fixation d'un couvercle sur chacune des deux boîtes à eau. Ces deux couvercles 17 sont illustrés à la figure 8.

On peut ainsi rétablir le circuit électrique au moyen de deux connecteurs 27 qui sont fixés entre eux au moyen de boulons 36. Chacun de ces connecteurs comporte un évidement 37 pour le passage de la partie cylindrique 33 des couvercles 17.

On peut noter que d'autres types de couvercles peuvent être utilisés, par exemple des couvercles à extrémité sphérique. Dans ce cas, les connecteurs 27 comportent une partie évidée de forme correspondante.

Ensuite, on raccorde les tuyaux 7 sur les embouts 24, placés sur les couvercles de boîte à eau, afin de rétablir le circuit de refroidissement des barres statoriques.

Enfin, on procède à la réisolation des barres statoriques.

On constate ainsi que le procédé selon l'invention évite le changement complet des barres statoriques présentant un défaut d'étanchéité avec leur boîte à fluide de refroidissement. Il permet de rétablir, sur place, l'étanchéité entre la barre statorique et la boîte à eau, lorsque cette étanchéité est défectueuse, sans porter atteinte au reste du bobinage.

Les signes de référence insérés après les caractéristiques techniques mentionnées dans les revendications, ont pour seul but de faciliter la compréhension de ces dernières et n'en limitent aucunement la portée.

## Revendications

1. Procédé de réparation d'une boîte à fluide de refroidissement du circuit de refroidissement d'une barre statorique d'un alternateur, l'étanchéité entre ladite boîte et ladite barre statorique étant défectueuse, selon lequel :
- on débranche le circuit de refroidissement (9, 12, 6, 7, 16),
- on découpe ladite boîte (4), selon un plan sensiblement perpendiculaire à l'axe (31) de l'alternateur,
- on réalise l'étanchéité entre la barre statorique (3) et la boîte (4),
- on fixe un couvercle (17) sur la boîte (4), selon ledit plan de découpe,
- on refroidit la barre statorique pendant les opérations de reprise d'étanchéité et de fixation du couvercle,
- on rétablit le circuit électrique de la barre statorique (3),
- on raccorde le circuit de refroidissement de la barre statorique (3).

2. Procédé selon la revendication 1, selon lequel la barre statorique (3) étant constituée de conducteurs creux (9) pour la circulation du fluide de refroidissement et de conducteurs pleins (10), des conducteurs pleins et creux traversant le fond de la boîte à fluide de refroidissement, on réalise l'étanchéité entre ladite boîte (4) et la barre statorique (3) en déposant un matériau d'étanchéité entre lesdits conducteurs (9, 10) et le fond de la boîte.

3. Procédé selon la revendication 2, selon lequel le matériau déposé pour réaliser l'étanchéité est une brasure.

4. Procédé selon l'une des revendications 1 à 3, selon lequel on refroidit la barre statorique (3) au moyen de pièces creuses (14), réalisées en un métal bon conducteur de la chaleur, qui sont disposées de part et d'autre de la barre statorique (3) et dans lesquelles on fait circuler un liquide de refroidissement.

5. Procédé selon l'une des revendications 1 à 4, selon lequel le couvercle (17) est fixé par soudure sur la boîte à fluide de refroidissement (4).

6. Procédé selon la revendication 5, selon lequel avant de souder le couvercle, on dresse par usinage la surface de découpe (17) de la partie de la boîte à fluide de refroidissement (4), restée en place.

7. Procédé selon l'une des revendications 5 ou 6, selon lequel on dispose un clinquant (26) de métal d'apport, entre les deux surfaces du joint de soudure (13, 34), entre la boîte à fluide de refroidissement et le couvercle.

8. Procédé selon l'une des revendications 5 à 7, selon lequel la soudure du couvercle (17) sur la boite à fluide de refroidissement (4) est réalisée au moyen d'un chauffage par induction (19).

9. Procédé selon la revendication 8, selon lequel les moyens de chauffage (19) par induction sont placés à l'extérieur de la deuxième boîte à fluide de refroidissement, au niveau des surfaces (13, 34) du joint de soudure.

10. Procédé selon l'une des revendications 1 à 9, selon lequel on découpe également la boîte à fluide de refroidissement d'une deuxième barre statorique qui est liée électriquement à celle dont l'étanchéité est défectueuse et réparée, un couvercle étant ensuite soudé sur cette deuxième boîte, le circuit électrique étant alors rétabli au moyen d'un connecteur (27), fixé entre les deux couvercles (17).
